# EUROPÄISCHE PATENTSCHRIFT

(11) **EP 3 810 531 B1**
(45) Veröffentlichungstag und Bekanntmachung des Hinweises auf die Patenterteilung: **18.05.2022**
(21) Anmeldenummer: 19729645.2
(22) Anmeldetag: 27.05.2019
(51) Int. Cl.: B65G 43/02, B65G 17/06

(54) **VERFAHREN ZUR VERSCHLEISSERKENNUNG UND FÖRDERSYSTEM MIT VERSCHLEISSERKENNUNG**
METHOD FOR WEAR DETECTION, AND CONVEYING SYSTEM WITH WEAR DETECTION
PROCÉDÉ DE DÉTECTION D'USURE ET SYSTÈME DE TRANSPORT DOTÉ D'UNE DÉTECTION D'USURE

(30) Priorität: 19.06.2018 EP 18178668
(43) Veröffentlichungstag der Anmeldung: 28.04.2021
(73) Patentinhaber: Siemens Aktiengesellschaft, 80333 München (DE)
(72) Erfinder: KÖNIG, Frank, 44879 Bochum (DE)
(74) Vertreter: Siemens Patent Attorneys
(86) Internationale Anmeldenummer: PCT/EP2019/063648
(87) Internationale Veröffentlichungsnummer: WO 2019/242999

(56) Entgegenhaltungen:
- EP-A1- 1 469 278
- EP-A1- 3 214 423
- WO-A1-2018/002708
- US-A1- 2011 278 137
- US-A1- 2017 283 183

## Beschreibung

Die vorliegende Erfindung bezieht sich auf ein Verfahren zur Verschleißerkennung beim Betreiben eines Fördersystems sowie auf ein Fördersystem mit Verschleißerkennung gemäß den unabhängigen Patentansprüchen.

Die vorliegende Erfindung betrifft insbesondere das technische Gebiet von Fördersystemen innerhalb eines Flughafens für Gepäckstücke und Stückgüter. Ein Ziel eines jeden Flughafenbetreibers ist es, Ausfälle bei der Gepäckabfertigung auf ein Minimum zu reduzieren. In der Praxis bedeutet dies, dass die Gepäckfördersysteme während des Betriebs "am Leben" gehalten werden und die zeitbasierte Wartung ausserhalb der Betriebszeiten durchgeführt wird. «Supervisory Control and Data Acquisition» Systeme, im folgenden SCADA-Systeme genannt, überwachen und steuern technische Prozesse mittels eines Computer-Systems und kommen häufig bei der Überwachung von Flughafen-Gepäckfördersystemen zur Anwendung. SCADA ermöglicht Flughafen- und anderen System-Betreibern, die Betriebszustände von ganzen Systemen zu überwachen.

Ein SCADA-System kann Ausfälle von Abschnitten eines Fördersystems anzeigen, beispielsweise wenn diese Abschnitte nicht mehr für die Gepäckabfertigung verfügbar sind. Kleinere Probleme, wie Störungen im Materialfluss, beispielsweise verursacht durch verkeilte Gepäckstücke, können sehr rasch behoben werden, so dass der betreffende Abschnitt in den normalen Betriebszustand zurückkehren kann. Komponentenausfälle, die durch Verschleiß verursacht werden, können jedoch meist nicht ohne signifikante Auswirkungen auf die Verfügbarkeit und Kapazität des Systems behoben werden. Diese Ausfälle können für den Flughafen- und die anderen System-Betreiber zu großen Problemen führen.

Dieses Problem wurde bisher mit einer sogenannten «präventiven Wartung» gelöst und beinhaltet das präventive Warten von Komponenten in vorherbestimmten Wartungsintervallen. Diese zeitbasierte Wartungsstrategie ist jedoch aufwendig. Darüber hinaus erfolgen Wartungsaktivitäten an einzelnen Komponenten, die eigentlich noch gar nicht nötig wären. Dazu kommt, dass die Abnutzung einzelner, identischer Komponenten nicht gleichmäßig ist, so dass einige Komponenten zu häufig, andere Komponenten zu spät gewartet werden und es somit trotz regelmäßiger Wartungsintervalle dennoch zu Ausfällen kommt. Daher werden zeitbasierte oder vorbeugende Wartungsprogramme zunehmend durch ein Programm zur korrektiven Wartung ersetzt, bekannt als Run-to-Failure RTF oder reaktive Wartung. Diese reaktive Wartung führt zu ausgefallenen Komponenten, die während des laufenden Betriebs repariert oder ersetzt werden müssen, was zu Systemausfallzeiten und zu Vertragsstrafen für verspätet gelieferte Gepäckstücke führen kann. Diese Vertragsstrafen sind von den Flughafenbetreibern an die Fluggesellschaften zu entrichten. Daneben entstehen hohe Kosten für die Reparatur oder den Ersatz wegen des plötzlichen Versagens, nicht zuletzt deshalb, weil das Wartungspersonal ähnlich wie eine Feuerwehr sofort einsatzbereit sein muss.

Ein Flughäfen-Gepäckausgabekarussell (reclaim carussel) gibt den ankommenden Passagieren ihr aufgegebenes Gepäck zurück. Das Gepäck wird dem Gepäckausgabekarussell in der Regel über Zuführbänder von ober- oder unterhalb zugeführt und dann auf ein sich bewegendes umlaufendes Förderband (reclaim belt) verteilt. Es ist üblich, dass diese Art von System zwei Zuführbänder hat, wodurch die Zuführkapazität erhöht wird, mit der das Gepäck an das umlaufende Förderband und somit an die Passagiere geliefert wird. Das umlaufende Förderband eines Gepäckausgabekarussells besteht typischerweise aus einem reibungsbetriebenen Förderband, das mit modularen Einheiten zu einer Endlosschleife zusammengebaut wird und dessen Hauptkomponenten gerade Förderstrecken, normale Kurven, Umkehrkurven und Antriebseinheiten sind.

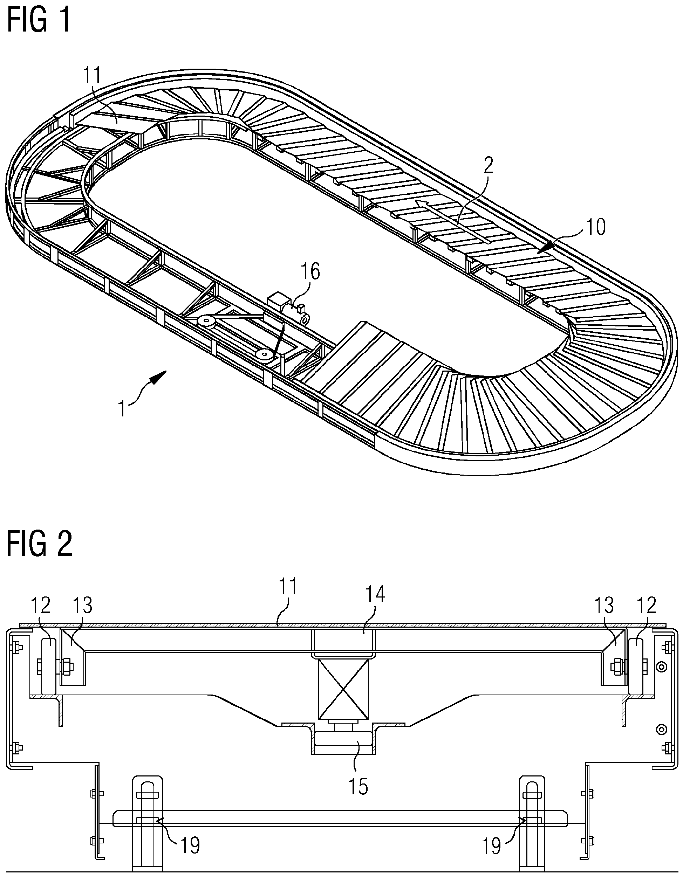

Im Folgenden wird auf die FIG 1 und 2 Bezug genommen. Gepäckausgabekarussells 1 haben in Abhängigkeit von Grösse und Konfiguration eine oder mehrere Antriebseinheiten 16 in einem geraden Bett, üblicherweise am Ende des am stärksten belasteten geraden Förderstreckenabschnitts.

Aus Redundanzgründen werden Gepäckausgabekarussells 1 typischerweise von zwei Antriebseinheiten 16 angetrieben, die über eine frei spinnende Kupplung (Fahrradprinzip) verbunden sind. Eine einzelne Antriebseinheit 16 ist so dimensioniert, dass sie ein Förderband 10 mit einer Länge von bis zu 75m längs der geschlossen Umlaufbahn 2 antreiben kann. Typischerweise sind Gummilamellen 11 des Förderbands 1200mm lang und 8mm dick. Ein gepresster Stahllamellenträger bzw. Fahrwerk 13 ist an jedem Kettenglied im Abstand von 250mm angebracht und trägt Polyurethan-bereifte Stützräder 12 und ein Führungsrad 15 für einen ruhigen, reibungslosen Betrieb. Gummilamellen 11 und Stützpuffer 19 sind an jedem Träger angebracht, um eine kontinuierliche Tragfläche zu schaffen.

Gepäckausgabekarussells 1 befinden sich in der Ankunftshalle und ihre Verschleißteile wie Rollen 13 und Schienen 18 sind hinter einer Verkleidung verborgen. Für eine vorbeugende Wartung ist der Zugang, und insbesondere auch durch die hohe Anzahl der zu inspizierenden Teile, zeitaufwendig und arbeitsintensiv. Gepäckausgabekarussells 1 arbeiten wie Förderbänder auf einer geschlossen Umlaufbahn 2 von bis zu mehreren hundert Meter Länge. Gepäckausgabekarussells 1 enthalten zwei Schienen 18 und etwa jeden halben Meter rollt eine Polyurethan-Walze als Transportrolle 13 auf je einer Schiene 18. Ein großer Flughafen betreibt bis 100 oder noch mehr solcher Gepäckausgabekarussells 1. Im Vergleich zu anderen für die Gepäckabfertigung verwendeten Komponenten sind Gepäckausgabekarussells im Betrieb sehr zuverlässig. Daher werden sie aus Kosten-Nutzen-Überlegungen meist gar nicht gewartet, sondern so lange betrieben, bis sie im laufenden Betrieb sich ein Ausfall ereignet.

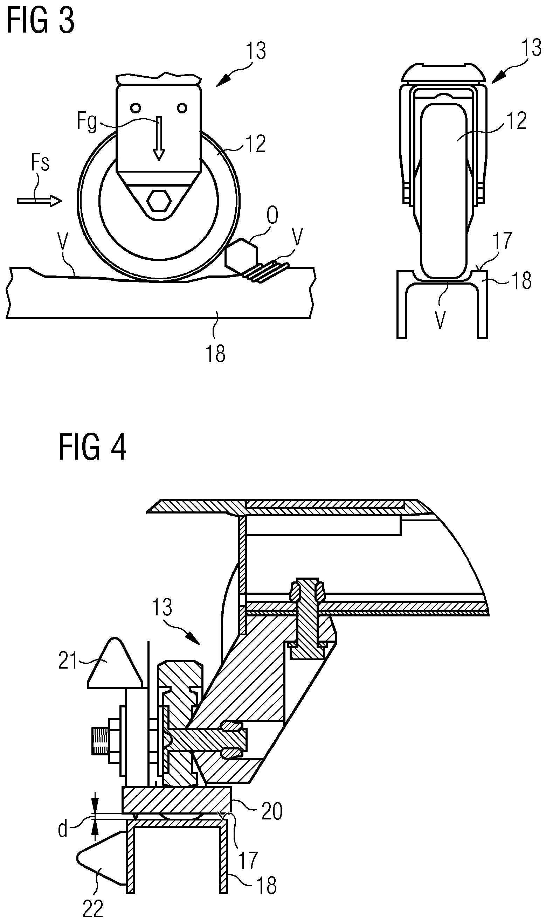

Ein abrasiver Verschleiß tritt dann auf, wenn ein fester Gegenstand, dessen Material die gleiche oder eine noch größere Härte aufweist als das Material der Transportrollen 12 oder der Schienen 18. Adhäsiver Verschleiß tritt durch Reibungswirkung zwischen Oberflächen von Übergangsstellen auf. Wenn diese Übergangsstellen unterschiedliche harte Materialien aufweisen, unterliegt das weichere Material einer Scherung und wird als Folge auf das härtere Material übertragen, siehe dazu FIG 3.

Der Verschleiß an den Schienen 18 wird durch Ablagerungen verursacht, die auf einen Abrieb mit hoher Belastung zurückzuführen sind. Abrasiver Verschleiß tritt insbesondere dann auf, wenn abrasive Partikel während der Abnutzung zusätzlich gebrochen werden. Außerdem werden Transportrollen 12, die durch ein Objekt O blockiert werden, verschlissen. Blockierte, also nicht bestimmungsgemäß rollende Transportrollen 12 sind einer starken Reibung und damit einhergehend hohen Temperaturen ausgesetzt und verlieren so Material.

Es ist daher wichtig, drohende Ausfälle von Komponenten des Fördersystems so früh zu erkennen, damit ein Betriebsausfall des Fördersystems während der Betriebszeit noch verhindert werden kann und die Reparatur unmittelbar beim Beginn einer Betriebspause durchgeführt werden kann. Eine solche Instandhaltungsstrategie wäre für Flughafen- und Systembetreiber besonders wichtig, ist jedoch bis heute noch nicht auf dem Markt verfügbar.

Die Schrift [1] offenbart eine drahtlose Überwachungsvorrichtung zur Erkennung eines Abriebzustandes für die Zugseilrinne eines Rades. Dazu wird ein Drahtlos-Sensor eingesetzt, der den erkannten Abrieb als Abnutzungszustandsinformation erfasst und an eine Managementplattform übermittelt. Dadurch entfallen regelmässige Inspektionen durch Fachpersonal. Diese Vorrichtung kann für Fördersysteme nicht wirtschaftlich eingesetzt werden, da so eine sehr grosse Anzahl von Sensoren platziert werden müsste und der wirtschaftliche Nutzen wegen der grossen Anzahl insgesamt gering bliebe.

Die Veröffentlichung [2] beschreibt eine Vorrichtung und ein Verfahren zum automatischen Erfassen des Verschleißzustandes von ortsbeweglichen Rädern oder Rollen in fördertechnischen Anlagen wie zB Gepäckförderanlagen. Die in [2] beschriebene Vorrichtung und das beschriebene Verfahren löst die Aufgabe, den Verschleißzustand auf eine einfache und sichere Weise automatisch messtechnisch zu erfassen, wenn eine zu überprüfende Rolle die Anlage durchläuft. Dies erfolgt durch eine im Förderweg der Anlage stationär angeordnete Messstation, in der Durchmesserabweichungen des Rades oder der Rolle von einem vorgegebenen Solldurchmesser berührungslos erfassbar und signalisierbar sind. Nachteilig bei dieser Lösung ist, dass die Verschleißerkennung auf Rollen beschränkt ist und Verschleißzustände von Schienen nicht detektieren kann. Die Veröffentlichung [2] beschreibt ein Verfahren gemäß dem Oberbegriff des unabhängigen Anspruchs 1 und eine Vorrichtung gemäß dem Oberbegriff des unabhängigen Anspruchs 8.

Der vorliegenden Erfindung liegt daher die Aufgabe zugrunde, ein Verfahren zur Verschleißerkennung beim Betrieb eines Fördersystems anzugeben, welches mit geringem apparativen Aufwand einen Verschleiß mit Angabe der Verschleißstelle (=Verschleißort) detektiert und somit eine VerschleißErkennung möglichst vor einem Systemausfall erlaubt. Ebenso soll ein Fördersystem angegeben werden, in dem die vorgenannte Verschleißerkennung realisiert ist.

Diese Aufgabe wird durch die in den unabhängigen Ansprüchen angegebenen Merkmale gelöst.

Die erfindungsgemässe Lösung zeichnet sich aus durch ein Verfahren zur Verschleißerkennung beim Betrieb eines Fördersystems, das gebildet wird aus wenigstens einem in einer geschlossenen Bahn umlaufenden Fahrwerk, wobei das Fahrwerk Transportrollen enthält, die auf Schienen bewegt werden und wobei am Fahrwerk ein Aufnehmer befestigt ist, der einen vorgegebenen Abstand zur Schienenoberfläche aufweist. Bei einem durch den Betrieb entstehenden Verschleiß an der Transportrolle und/oder an der Schiene berührt der Aufnehmer die Schienenoberfläche und wird dadurch in Schwingungen versetzt. Ein mit dem Aufnehmer gekoppelter Schwingungssensor registriert die Schwingungen. Die registrierten Schwingungen werden vom Schwingungssensor zusammen mit einem Zeitstempel und einer Identität des Schwingungssensors drahtlos an ein Hintergrundsystem übermittelt. Im Hintergrundsystem werden die übermittelten Daten einer Analyse unterzogen und bei Abweichungen als Verschleiß erkannt und mit einer Meldung signalisiert.

Die erfindungsgemässe Lösung bezieht sich ferner auf ein Fördersystem, das gebildet wird aus wenigstens einem in einer geschlossenen Bahn auf Schienen umlaufenden Fahrwerk, wobei das Fahrwerk Transportrollen enthält und am Fahrwerk ein Aufnehmer befestigt ist, der einen vorgegebenen Abstand zur Schienenoberfläche aufweist, wobei
a) bei einem im Betrieb des Fördersystems entstehenden Verschleiß an der Transportrolle und/oder an der Schiene der Aufnehmer die Schienenoberfläche berührt und dadurch in Schwingungen versetzt wird;
b) mit dem Aufnehmer ein Schwingungssensor gekoppelt ist, der die Schwingungen registriert;
c) die registrierten Schwingungen vom Schwingungssensor zusammen mit einem Zeitstempel und einer Identität des Schwingungssensors drahtlos an ein Hintergrundsystem übermittelt werden;
d) im Hintergrundsystem die drahtlos übermittelten Schwingungen und der Zeitstempel einer Analyse unterzogen und Abweichungen als Verschleiß erkannt und mit einer Meldung signalisiert werden.

So können sich die folgenden Vorteile zusätzlich ergeben:
i) Durch die erfindungsgemässe Lösung kann ein Verschleiß an einer Transportrolle oder an einer Schiene vor Eintritt eines Systemausfalls erkannt werden und die Wartungsarbeiten können noch rechtzeitig gestartet werden.
ii) Die erfindungsgemässe Lösung eignet sich insbesondere für Fördersysteme, bei denen Fahrwerke und Schienen verborgen sind und nur durch Öffnen von Abdeckungen inspiziert und ggf. repariert werden können.

Bevorzugt werden Schwingungssensoren eingesetzt, die neben den registrierten Schwingungsdaten auch ihre Zustandsdaten wie zB verbleibende Batteriekapazität und Temperatur übermitteln. Dadurch ist auch eine Überwachung der Sensoren selbst sichergestellt und die Wartungsaufwendungen werden dadurch noch einmal deutlich reduziert.

In einer bevorzugten Ausführungsform ist auch vorgesehen, dass Sensoren an den Schienen angebracht sind, um einen Verschleiß an den Transportrollen frühzeitig erkennen zu können, zB eine Flachstelle einer Transportrolle aufgrund einer Blockierung durch einen Fremdkörper.

Weitere vorteilhafte Ausführungsformen der Erfindung sind in den abhängigen Ansprüchen angegeben.

Die Erfindung wird nachfolgend anhand der Zeichnung beispielsweise näher erläutert. Dabei zeigen:
Figur 1 Perspektivische Ansicht eines teilweise geöffneten Gepäckausgabekarussells;
Figur 2 Querschnittdarstellung eines Gepäckausgabekarussells;
Figur 3 Darstellungen von Verschleißstellen an einer Schiene;
Figur 4 Anordnung von Sensoren in einem Gepäckausgabekarussell;
Figur 5 Darstellung der Kommunikationswege von Sensoren, Gateway und Hintergrundsystem;
Figur 6 Darstellungen von detektiertem Ort von Verschleißstellen an einem Fördersystem;
Figur 7 Darstellung der verschiedenen (Verschleiß-) Zustände von Rad und Schiene.

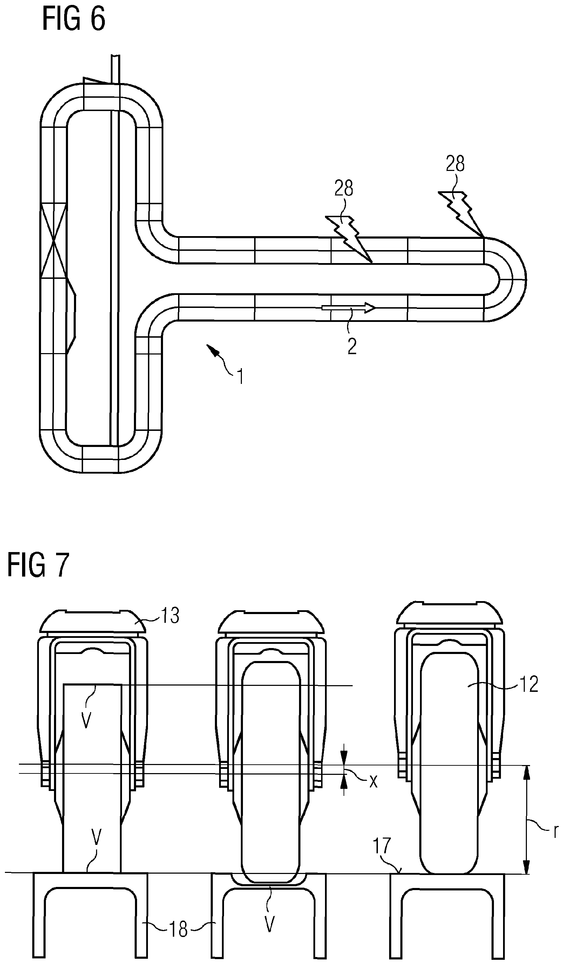

Das nachstehend detailliert beschriebene Ausführungsbeispiel bezieht sich auf ein Gepäckausgabekarussell. Die Erfindung ist jedoch nicht auf ein Gepäckausgabekarussell beschränkt, sondern für jede Art von Fördersystemen anwendbar, die einen geschlossenen Umlauf aufweisen und wenigstens ein Fahrwerk umfassen, dessen wenigstens zwei Rollen bzw. Räder auf je einer Schiene bewegt werden. Je ein Beispiel solcher geschlossener Umläufe ist der FIG 1 bzw. der FIG 6 zu entnehmen.

Die konkrete Ausführung der Detektion von Verschleißstellen wird anhand der FIG 4 beschrieben. FIG 4 zeigt ein Fahrwerk 13 mit einem Rad 12 - auch Transportrolle 12 genannt -, das auf der Schienenoberfläche 17 einer Schiene 18 rollt. Da die Führung des Fahrwerks 13 mit einer weiteren Führungsrolle 15 erfolgt, sind die Schienen flach ausgebildet, also nicht in der Art einer Eisenbahnschiene mit der Führung durch den Spurkranz eines Rades.

Am Fahrwerk 13 ist ein Aufnehmer 20 befestigt, dessen Abstand d zur Schienenoberfläche fest einstellbar ist und höchstens wenige Millimeter beträgt. Mit dem Betrieb der Förderanlage ergibt sich ein Verschleiß V entweder am Rad 12 oder auf einem Teil der Schiene 18, wie dies in FIG 3 rechts deutlich gezeigt ist. Durch diesen Verschleiß V wird zu einem gegebenen Zeitpunkt der Aufnehmer 20 die Schienenoberfläche 17 berühren. Dadurch entstehen ein Kratzgeräusch bzw. Schwingungen, die von einem Sensor 21 registriert werden. Dieses Prinzip ist vergleichbar mit einer Grammophonnadel, die eine Schallplatte berührt und zielt auf eine automatische 24/7-Verschleißkontrolle ab und macht so eine manuelle Prüfung überflüssig; 24/7 steht für 24h an 7 Tagen.

Ein drahtloser, batteriebetriebener Sensor 21 ist mechanisch mit dem Aufnehmer 20 gekoppelt und registriert die Schwingungen/Vibrationen des Aufnehmers 20. Der Sensor 21 führt zur Registrierung der Vibrationen eine 3-Achsenbeschleunigungsmessung durch. Die registrierten Schwingungen werden zusammen mit einer Identität des Sensors 21 an ein im Fördersystem 1 angebrachtes Gateway 23 übermittelt.

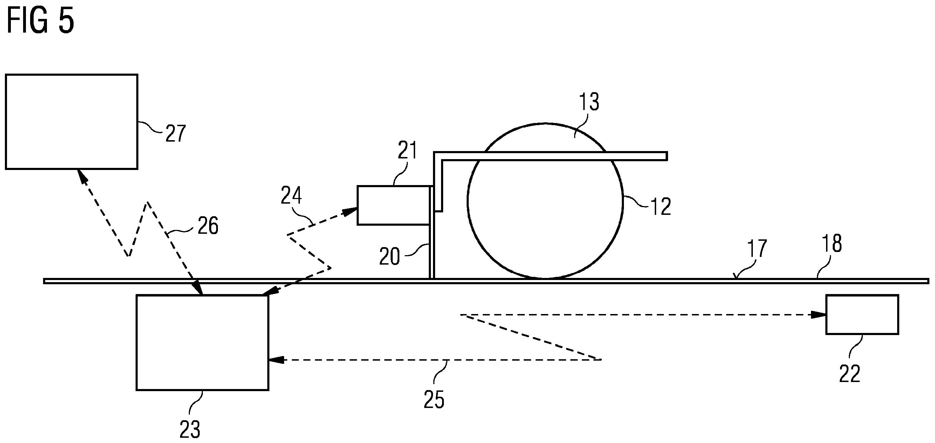

Für die Feststellung des Ortes einer Verschleißstelle wird auf FIG 5 Bezug genommen. Wie oben erläutert, führt das Fahrwerk 13 einen geschlossenen Umlauf aus und fährt bei jedem Umlauf auch in der unmittelbaren Nähe des Gateways 23 vorbei. Durch eine permanente oder zyklische Kommunikation 24 zwischen Sensor 21 und Gateway 23 wird dadurch bei jeder Vorbeifahrt eine Nullzeit definiert. Dieses Gateway 23 hat somit eine Funktion einer Bake. Damit steht bei dieser Übermittlung der Schwingungen auch ein Zeitstempel zur Verfügung, der eine relative Zeit zur Nullzeit beinhaltet. Da die Umlaufgeschwindigkeit solcher Fördersysteme bekannt und in aller Regel konstant ist, kann die Stelle einer überstarken Schwingung - und somit eine Verschleißstelle V - aufgrund einer Berührung des Aufnehmers 21 mit der Schienenoberfläche 17 relativ zur Lage des Gateways 23 bestimmt werden. Relativ zur Lage steht für die Länge des zurückgelegten Wegs und nicht etwa für eine Punkt-Punkt Distanz zwischen Gateway und Verschleißstelle V. Ausserdem kann auch eine Uhrzeit zu jeder Registrierung eines Sensors 21 oder 22 im Hintergrundsystem zugeordnet werden.

Für die Erläuterung der Verschleißarten wird auf FIG 3 und FIG 7 Bezug genommen. FIG 3 zeigt rechts eine Schiene 18 mit einem Verschleiß V an der Schienenoberfläche 17. Das Rad 12 ist hier intakt. Nicht dargestellt in FIG 3 rechts ist der Aufnehmer 20. Es ist jedoch unmittelbar erkennbar, dass der Aufnehmer 20 mit der ursprünglichen Schienenoberfläche links und rechts des Verschleißes V in Kontakt tritt und somit in Schwingungen versetzt wird, die vom Sensor 21 registriert werden können. FIG 7 zeigt rechts einen Neuzustand von Rad 12 und Schiene 18 bzw. Schienenoberfläche 17. Mit r ist der Abstand (=Radius) von der Drehachse des Rades 12 zur Schienenoberfläche 17 bezeichnet. FIG 7 in der Mitte stellt einen Verschleiß V an der Schiene 18 dar, in FIG 7 links ist ein Verschleiß V eines Rades 12 dargestellt. Beiden Verschleißarten ist gemeinsam, dass die Drehachse gegenüber der ursprünglichen Lage um einen Abstand x verschoben ist.

Das Berühren des Aufnehmers 20 mit der Schienenoberfläche 17 führt zu einer Erhöhung der Schwinggeschwindigkeit und/oder Schwingamplitude.

Der Sensor 21 erkennt über den Aufnehmer 21 eine Erhöhung der Schwinggeschwindigkeit, die durch Fremdkörper O verursacht wird. Solche Fremdkörper können die Räder blockieren wie dies zB in FIG 3 links dargestellt wird. Es wird erwartet, dass Räder im Normalbetrieb Schwingungen (Peak-to-Peak-Geschwindigkeit) von ca. 5mm/s auf die Schiene übertragen und "blockierte" Räder-Schwingungen von ca. 85 mm/s erzeugen. Mit "blockierte" Räderschwingungen werden Schwingungen verstanden, die durch Räder erzeugt werden, die aufgrund einer vorstehend erwähnten Blockade einen inhomogen Verschleiß in Form einer Flachstelle aufweisen.

Zusätzlich zum Sensor 21 am Fahrwerk 13 kann je ein Sensor 22 an je einer Schiene 20 - also links und rechts - angebracht werden, der vom gleichen Typ wie der Sensor 21 ist und die vorstehend erwähnten Schwingungen durch Räder mit Flachstellen registriert.

Die vom Gateway 23 empfangenen Daten, also wenigstens das Tripel Frequenz/Amplitude, Zeitstempel und Identität des Sensors werden an ein Hintergrundsystem - zB an eine Cloud - übermittelt und dort mittels eines Signalverarbeitungsserver analysiert durch
- Vergleich mit den vorangehen empfangenen Tripeln;
- statistische Auswertung über die Zeit.
Wenn bei dieser Analyse eine signifikante Abweichung festgestellt wird, kann eine Meldung an den Betreiber mit Angabe der Anlage und des Ortes in der Anlage übermittelt werden, um Wartungspersonal aufbieten zu können. Im Hintergrundsystem 27 sind weitere Anlagenparameter gespeichert, insbesondere eine Zuordnung von Identität eines Sensors zu einer Anlage und Zuordnung von Identität eines Sensors zu einer Spur und Rad 12 bzw. zu einer Schiene 18.

Als Sensoren 21, 22 sind "all in one" "Bluetooth Low Energy" BLE fähige Sensor vorgesehen, die hier als «Vibrations-BLE-Sensoren» bezeichnet werden.

Ein Fördersystem 1 verfügt vorzugsweise über wenigsten zwei fixe an Schienen 18 befestigte Sensoren 22 und zwei auf einem Fahrwerk 13 befindliche mit dem Aufnehmer 20 gekoppelte Sensoren 21. Jeder dieser Sensoren 21, 22 ist von der vorgenannten Art «Vibrations-BLE-Sensor» verfügen. Diese Vibrations-BLE-Sensoren sind batteriebetrieben, mit einer Lebensdauer von 3 bis 9 Jahren. Die Lebensdauer ist abhängig vom Datenübertragungszyklus zum Gateway. Diese Schwingungs- und Temperatur-BLE-Sensoren können zusätzlich ihren internen Status wie zB die verbleibende Batteriekapazität zum vorerwähnten Tripel via Gateway 23 an das Hintergrundsystem 27. übermitteln. Ebenso ist eine Übermittlung der Temperatur als Option möglich. Mit diesen zusätzlichen Daten kann im Hintergrundsystem durch den Signalverarbeitungsserver somit auch der Zustand der Sensoren überwacht werden. Dadurch wird die Verfügbarkeit des vorgeschlagenen Verfahrens und Systems zur Verschleißerkennung beim Betrieb eines Fördersystems noch einmal und ohne zusätzlichen apparativen Aufwand verbessert.

### Liste der Bezugszeichen, Glossar

- 1: Fördersystem, Gepäckkarussell
- 2: Bahn, geschlossene Umlaufbahn
- 10: Förderband
- 11: Lamellen, Gummilamellen
- 12: Stützrad, Polyurethan-Walze; Transportrolle, Rad
- 13: Fahrwerk
- 14: Lamellenträger
- 15: Führungsrad
- 16: Antriebseinheit
- 17: Schienenoberfläche
- 18: Schiene
- 19: Stützpuffer
- 20: Aufnehmer
- 21: Sensor an Fahrwerk
- 22: Sensor an Schiene
- 23: Gateway, WiFi-Gateway, Bake
- 24: Kommunikation Sensor 21 ←→ Gateway
- 25: Kommunikation Sensor 22 ←→ Gateway
- 26: Kommunikation ←→ Hintergrundsystem
- 27: Hintergrundsystem, Auswertesystem
- 28: Signalisierte Verschleißstelle
- BLE: Bluetooth Low Energy
- d: Abstand zwischen Aufnehmer und Schienenoberfläche
- O: Fremdkörper
- r: Radius eines Rades im unverschlissenen Zustand
- V: Verschleiß, Verschleiß-Stelle
- x: Durch Verschleiß verursachte Verschiebung von Drehachsen

### Liste der zitierten Dokumente

[1] CN103458040 (A)
   «Equipment abrasion state wireless monitoring device based on internet of things» TIANJIN ZHONGTIANYI INFORMATION TECHNOLOGY CO LTD
[2] EP 1 469 278 A1
   «Vorrichtung zum Erfassen des Verschleißzustandes von Rädern oder Rollen» SIEMENS AKTIENGESELLSCHAFT,DE - 80333 München

## Patentansprüche

1. Verfahren zur Verschleißerkennung beim Betrieb eines Fördersystems (1) das gebildet wird aus wenigstens einem in einer geschlossenen Bahn umlaufenden Fahrwerk (13), wobei das Fahrwerk (13) Transportrollen (12) enthält, die auf Schienen (18) bewegt werden und **dadurch gekennzeichnet, daß** am Fahrwerk (13) ein Aufnehmer (20) befestigt ist, der einen vorgegebenen Abstand (d) zur Schienenoberfläche (17) aufweist; und wobei das Verfahren die folgenden Verfahrensschritte aufweist:
a) bei einem durch den Betrieb entstehenden Verschleiß an der Transportrolle (12) und/oder an der Schiene (18) berührt der Aufnehmer (20) die Schienenoberfläche (17) und wird dadurch in Schwingungen versetzt;
b) ein mit dem Aufnehmer (20) gekoppelter Schwingungssensor (21) registriert die Schwingungen;
c) die registrierten Schwingungen werden vom Schwingungssensor (21) zusammen mit einem Zeitstempel und einer Identität des Schwingungssensors (21) drahtlos an ein Hintergrundsystem (27) übermittelt (24, 26);
d) im Hintergrundsystem (27) werden die im Verfahrensschritt c) übermittelten Daten einer Analyse unterzogen und bei Abweichungen als Verschleiß (V) erkannt und mit einer Meldung signalisiert.

2. Verfahren nach Anspruch 1,
bei dem die Bahn durch zwei Schienen (18) gebildet wird und an jeder Schiene (18) wenigstens ein fixer Schwingungssensors (22) befestigt ist,
**gekennzeichnet durch** die Verfahrensschritte
e) Registrierung der durch eine vorbeirollende einen Verschleiß aufweisende Transportrolle (13) erzeugte Schwingungen durch den fixen Schwingungssensor (22)
f) Übermittlung (25, 26) der im Verfahrensschritt e) registrierten Schwingungen zusammen mit einem Zeitstempel und einer Identität des fixen Schwingungssensors (22) an das Hintergrundsystem (27);
g) Durchführung des Verfahrensschrittes d) von Anspruch 1 für die im Verfahrensschritt f) übermittelten Daten.

3. Verfahren nach Anspruch 1 oder 2,
**dadurch gekennzeichnet, dass**
die Übermittlung der Daten von den Sensoren (21, 22) zum Hintergrundsystem (27) über ein Gateway (23) erfolgt, wobei das Gateway (23) an einem festen Ort der Bahn installiert ist und bei jeder Überfahrt eines einen Sensor (21) aufweisenden Fahrwerks (13) eine Nullzeit gesetzt wird.

4. Verfahren nach einem der Ansprüche 1 bis 3,
**dadurch gekennzeichnet, dass**
die Abweichungen durch einen statistischen Vergleich mit vorangehenden Registrierungen oder durch einen Vergleich mit einer fixen Grösse erkannt werden.

5. Verfahren nach einem der Ansprüche 1 bis 4,
**dadurch gekennzeichnet, dass**
zusätzlich zu den registrierten Schwingungen Zustandsdaten eines jeden Sensors (21, 22) übermittelt werden.

6. Verfahren nach Anspruch 5,
**dadurch gekennzeichnet, dass**
die Zustandsdaten eines jeden Sensors (21, 22) eine verbleibende Batteriekapazität und seine Temperatur enthalten.

7. Verfahren nach Anspruch 6,
**dadurch gekennzeichnet, dass**
bei Unterschreiten einer festgelegten Batteriekapazität oder bei Überschreiten einer bestimmten Temperatur ebenfalls eine Meldung gemäss im Verfahrensschritt d) abgesetzt wird.

8. Fördersystem (1) das aus wenigstens einem in einer geschlossenen Bahn (2) auf Schienen (18) umlaufenden Fahrwerk (13) gebildet wird, wobei das Fahrwerk (13) Transportrollen (12) enthält und **dadurch gekennzeichnet, daß** am Fahrwerk (13) ein Aufnehmer (20)
befestigt ist, der einen vorgegebenen Abstand (d) zur Schienenoberfläche (17) aufweist,
wobei
a) bei einem im Betrieb des Fördersystems (1) entstehenden Verschleiß an der Transportrolle (12) und/oder an der Schiene (18) der Aufnehmer (20) die Schienenoberfläche (17) berührt und dadurch in Schwingungen versetzt wird;
b) mit dem Aufnehmer (20) ein Schwingungssensor (21) gekoppelt ist, der die Schwingungen registriert;
c) die registrierten Schwingungen vom Schwingungssensor (21) zusammen mit einem Zeitstempel und einer Identität des Schwingungssensors (21) drahtlos an ein Hintergrundsystem (27) übermittelt (24, 26) werden;
d) im Hintergrundsystem (27) die drahtlos übermittelten Schwingungen und der Zeitstempel einer Analyse unterzogen werden und Abweichungen als Verschleiß (V) erkannt und mit einer Meldung signalisiert werden.

9. Fördersystem (1) nach Anspruch 8 bei dem die Bahn durch zwei Schienen (18) gebildet wird und an jeder Schiene (18) wenigstens ein fixer Schwingungssensor (22) befestigt ist, der durch eine vorbeirollende, einen Verschleiß aufweisende Transportrolle (13) erzeugte Schwingungen registriert und an ein Hintergrundsystem (27) übermittelt (25, 26);
wobei
e) die durch eine vorbeirollende einen Verschleiß aufweisende Transportrolle (13) erzeugten Schwingungen durch den fixen Schwingungssensor (22) registriert werden;
f) die vom fixen Schwingungssensor (22) registrierten Schwingungen zusammen mit einem Zeitstempel und einer Identität des fixen Schwingungssensors (22) an das Hintergrundsystem (27) übermittelt werden;
g) im Hintergrundsystem (27) die drahtlos übermittelten Schwingungen und der Zeitstempel einer Analyse unterzogen werden und Abweichungen als Verschleiß (V) erkannt und mit einer Meldung signalisiert werden.

10. Fördersystem (1) nach Anspruch 8 oder 9,
wobei
die Abweichungen durch einen statistischen Vergleich mit vorangehenden Registrierungen oder durch einen Vergleich mit einer fixen Grösse erkannt werden.

11. Fördersystem (1) nach einem der Ansprüche 8 bis 10,
wobei
zusätzlich zu den registrierten Schwingungen Zustandsdaten eines jeden Sensors (21, 22) übermittelt werden.

12. Fördersystem (1) nach Anspruch 11,
wobei
jeder Sensor (21, 22) von einer Batterie betrieben wird und die Zustandsdaten eines jeden Sensors (21, 22) seine Temperatur und eine verbleibende Batteriekapazität enthalten.

## Claims

1. Method for wear detection during operation of a conveying system (1), which is formed of at least one running gear (13) circulating in a closed path, wherein the running gear (13) contains transport rollers (12), which are moved on rails (18), and **characterised in that** a pick-up (20), which has a predefined distance (d) from the rail surface (17), is fastened to the running gear (13);
and wherein the method has the following method steps:
a) in the event of wear on the transport roller (12) and/or on the rail (18) which occurs due to operation, the pick-up (20) touches the rail surface (17) and is made to oscillate as a result;
b) an oscillation sensor (21) coupled to the pick-up (20) registers the oscillations;
c) the registered oscillations are transmitted (24, 26) wirelessly to a background system (27) by the oscillation sensor (21), together with a time stamp and an identity of the oscillation sensor (21);
d) in the background system (27), the data transmitted in method step c) is subjected to an analysis and, in the event of deviations, is detected as wear (V) and signalled by a message.

2. Method according to claim 1,
in which the path is formed by two rails (18) and at least one fixed oscillation sensor (22) is fastened to each rail (18), **characterised by** the method steps
e) registering the oscillations generated by a transport roller (13) which is rolling past and has wear by way of the fixed oscillation sensor (22);
f) transmitting (25, 26) the oscillations registered in method step e) to the background system (27), together with a time stamp and an identity of the fixed oscillation sensor (22);
g) performing method step d) from claim 1 for the data transmitted in method step f).

3. Method according to claim 1 or 2,
**characterised in that**
the transmission of the data from the sensors (21, 22) to the background system (27) takes place via a gateway (23), wherein the gateway (23) is installed at a fixed location in the path and, each time a running gear (13) having a sensor (21) passes over it, a zero time is set.

4. Method according to one of claims 1 to 3,
**characterised in that**
the deviations are detected by a statistical comparison with preceding registrations or by a comparison with a fixed magnitude.

5. Method according to one of claims 1 to 4,
**characterised in that**
in addition to the registered oscillations, state data of each sensor (21, 22) is transmitted.

6. Method according to claim 5,
**characterised in that**
the state data of each sensor (21, 22) contains a remaining battery capacity and its temperature.

7. Method according to claim 6,
**characterised in that**
when a specified battery capacity is fallen below or a particular temperature is exceeded, a message is likewise issued according to method step d).

8. Conveying system (1), which is formed of at least one running gear (13) circulating on rails (18) in a closed path (2), wherein the running gear (13) contains transport rollers (12) and **characterised in that** a pick-up (20), which has a predefined distance (d) from the rail surface (17), is fastened to the running gear (13),
wherein
a) in the event of wear on the transport roller (12) and/or on the rail (18) which occurs during operation of the conveying system (1), the pick-up (20) touches the rail surface (17) and is made to oscillate as a result;
b) an oscillation sensor (21), which registers the oscillations, is coupled to the pick-up (20);
c) the registered oscillations are transmitted (24, 26) wirelessly to a background system (27) by the oscillation sensor (21), together with a time stamp and an identity of the oscillation sensor (21);
d) in the background system (27), the wirelessly transmitted oscillations and the time stamp are subjected to an analysis and deviations are detected as wear (V) and signalled by a message.

9. Conveying system (1) according to claim 8, in which the path is formed by two rails (18) and at least one fixed oscillation sensor (22) is fastened to each rail (18), which registers oscillations generated by a transport roller (13) which is rolling past and has wear and transmits (25, 26) said oscillations to a background system (27);
wherein
e) the oscillations generated by a transport roller (13) which is rolling past and has wear are registered by way of the fixed oscillation sensor (22);
f) the oscillations registered by the fixed oscillation sensor (22) are transmitted to the background system (27), together with a time stamp and an identity of the fixed oscillation sensor (22);
g) in the background system (27), the wirelessly transmitted oscillations and the time stamp are subjected to an analysis and deviations are detected as wear (V) and signalled by a message.

10. Conveying system (1) according to claim 8 or 9,
wherein
the deviations are detected by a statistical comparison with preceding registrations or by a comparison with a fixed magnitude.

11. Conveying system (1) according to one of claims 8 to 10, wherein
in addition to the registered oscillations, state data of each sensor (21, 22) is transmitted.

12. Conveying system (1) according to claim 11,
wherein
each sensor (21, 22) is operated by a battery and the state data of each sensor (21, 22) contains its temperature and a remaining battery capacity.

## Revendications

1. Procédé de détection d'usure lors du fonctionnement d'un système de transport (1) constitué d'au moins un châssis (13) parcourant un circuit fermé, dans lequel le châssis (13) contient des roues de transport (12) qui sont déplacées sur des rails (18), et **caractérisé en ce qu'**un récepteur (20), présentant une distance (d) prédéfinie par rapport à la surface de rail (17), est fixé au châssis (13) ; et dans lequel le procédé comprend les étapes ci-dessous consistant à :
a) en cas d'usure d'une roue de transport (12) et/ou du rail (18) résultant du fonctionnement, le récepteur (20) entre en contact avec la surface de rail (17) et est ainsi mis en vibration ;
b) un capteur de vibrations (21) couplé au récepteur (20) enregistre les vibrations ;
c) les vibrations enregistrées, associées à un horodatage et à une identité du capteur de vibrations (21), sont transmises (24, 26) sans fil du capteur de vibrations (21) à un système d'arrière-plan (27) ;
d) dans le système d'arrière-plan (27), les données transmises lors de l'étape de procédé c) sont soumises à une analyse et, en cas d'écart, sont identifiées comme usure (V) et signalées par un message.

2. Procédé selon la revendication 1,
dans lequel le circuit est formé par deux rails (18) et au moins un capteur de vibrations fixe (22) est fixé à chaque rail (18),
**caractérisé par** les étapes consistant à :
e) enregistrer, grâce au capteur de vibrations fixe (22), les vibrations générées par une roue de transport (13) en cours de passage et présentant une usure ;
f) transmettre (25, 26) au système d'arrière-plan (27) les vibrations enregistrées lors de l'étape e), associées à un horodatage et à une identité du capteur de vibrations fixe (22) ;
g) mettre en œuvre l'étape de procédé d) de la revendication 1 pour les données transmises lors de l'étape de procédé f).

3. Procédé selon la revendication 1 ou 2,
**caractérisé en ce que**
les données sont transmises des capteurs (21, 22) vers le système d'arrière-plan (27) par l'intermédiaire d'une passerelle (23), dans lequel la passerelle (23) est installée au niveau d'un emplacement fixe du circuit et un temps zéro est défini pour chaque passage d'un châssis (13) présentant un capteur (21).

4. Procédé selon l'une quelconque des revendications 1 à 3, **caractérisé en ce que**
les écarts sont identifiés grâce à une comparaison statistique avec des enregistrements précédents ou grâce à une comparaison avec une quantité fixe.

5. Procédé selon l'une quelconque des revendications 1 à 4, **caractérisé en ce que**
des données d'état de chaque capteur (21, 22) sont transmises en plus des vibrations enregistrées.

6. Procédé selon la revendication 5,
**caractérisé en ce que**
les données d'état de chaque capteur (21, 22) contiennent une capacité de batterie restante et sa température.

7. Procédé selon la revendication 6,
**caractérisé en ce que**
en cas de dépassement inférieur d'une capacité de batterie spécifiée, ou en cas de dépassement supérieur d'une certaine température, un message est également émis conformément à l'étape de procédé d).

8. Système de transport (1) constitué d'au moins un châssis (13) parcourant un circuit fermé (2) sur des rails (18), dans lequel le châssis (13) contient des roues de transport (12), et **caractérisé en ce qu'**un récepteur (20) est fixé au châssis (13) et présente une distance (d) prédéfinie par rapport à la surface de rail (17),
dans lequel :
a) en cas d'usure d'une roue de transport (12) et/ou du rail (18) résultant du fonctionnement du système de transport (1), le récepteur (20) entre en contact avec la surface de rail (17) et est ainsi mis en vibration ;
b) un capteur de vibrations (21) enregistrant les vibrations est couplé au récepteur (20) ;
c) les vibrations enregistrées, associées à un horodatage et à une identité du capteur de vibrations (21), sont transmises (24, 26) sans fil du capteur de vibrations (21) à un système d'arrière-plan (27) ;
d) dans le système d'arrière-plan (27), les vibrations transmises sans fil et l'horodatage sont soumis à une analyse et les écarts sont identifiés comme usure (V) et signalés par un message.

9. Système de transport (1) selon la revendication 8, dans lequel le circuit est formé par deux rails (18), et au moins un capteur de vibrations fixe (22) enregistrant les vibrations générées par une roue de transport (13) en cours de passage et présentant une usure et les transmettant (25, 26) à un système d'arrière-plan (27) est fixé à chaque rail (18) ;
dans lequel :
e) les vibrations générées par une roue de transport (13) en cours de passage et présentant une usure sont enregistrées par le capteur de vibrations fixe (22) ;
f) les vibrations enregistrées par le capteur de vibrations fixe (22) sont transmises, associées à un horodatage et à une identité du capteur de vibrations fixe (22), au système d'arrière-plan (27) ;
g) dans le système d'arrière-plan (27), les vibrations transmises sans fil et l'horodatage sont soumis à une analyse et les écarts sont identifiés comme usure (V) et signalés par un message.

10. Système de transport (1) selon la revendication 8 ou 9, dans lequel :
les écarts sont identifiés grâce à une comparaison statistique avec des enregistrements précédents ou grâce à une comparaison avec une quantité fixe.

11. Système de transport (1) selon l'une quelconque des revendications 8 à 10,
dans lequel :
des données d'état de chaque capteur (21, 22) sont transmises en plus des vibrations enregistrées.

12. Système de transport (1) selon la revendication 11,
dans lequel :
chaque capteur (21, 22) est alimenté par une batterie ; et
les données d'état de chaque capteur (21, 22) contiennent sa température et une capacité de batterie restante.
